# EUROPÄISCHE PATENTSCHRIFT

(11) **EP 3 086 151 B1**
(45) Veröffentlichungstag und Bekanntmachung des Hinweises auf die Patenterteilung: **10.10.2018**
(21) Anmeldenummer: 16165788.7
(22) Anmeldetag: 18.04.2016
(51) Int. Cl.: G02B 7/00, G02B 27/62

(54) **SYSTEM UND VERFAHREN ZUM AUSRICHTEN EINER BLENDE RELATIV ZU EINER OPTISCHEN ACHSE**
SYSTEM AND METHOD FOR ALIGNING A SHUTTER RELATIVE TO AN OPTICAL AXIS
SYSTEME ET PROCEDE D'ALIGNEMENT D'UN ECRAN PAR RAPPORT A UN AXE OPTIQUE

(30) Priorität: 22.04.2015 DE 202015002992 U
(43) Veröffentlichungstag der Anmeldung: 26.10.2016
(73) Patentinhaber: Möller-Wedel Optical GmbH, 22880 Wedel (DE)
(72) Erfinder: Kreitschik, David, 22880 Wedel (DE)
(74) Vertreter: Glawe, Delfs, Moll

(56) Entgegenhaltungen:
- EP-A2- 1 521 067
- JP-A- 2001 209 965
- US-A1- 2009 161 209

## Beschreibung

Die vorliegende Erfindung betrifft ein System und ein Verfahren zum Ausrichten einer Blende relativ zu einer optischen Achse.

In optischen Messsystemen wird häufig ein Messstrahl entlang einer optischen Achse auf ein zu untersuchendes Objekt geleitet. Aufgrund von elektromagnetischer Wechselwirkung interagiert der Messstrahl mit den Molekülen bzw. Atomen des Objekts, wobei der Messstrahl reflektiert, absorbiert und / oder transmittiert wird. Durch Auswertung des reflektierten, absorbierten und / oder transmittierten Teils des Messstrahls können die physikalischen Eigenschaften des zu untersuchenden Objekts ermittelt werden.

In bestimmten Fällen ist es erwünscht, den Messstrahl mit Hilfe einer Blende und einer darin angeordneten Apertur räumlich zu begrenzen. Die Blende wird dazu in Bezug zum Messstrahl so angeordnet, dass der Messstrahl teilweise durch die Apertur hindurchtritt und teilweise durch die Blende abgeschirmt wird. Der durch den Messstrahl beleuchtete Teil des zu untersuchenden Objekts wird auf diese Weise verkleinert. Auch im Zusammenhang mit der Mikroskopie und insbesondere der Phasenkontrastmikroskopie ist es mitunter erforderlich eine Blende relativ zur optischen Achse des Mikroskops auszurichten (siehe etwa US 2009/0161209 A1).

Für viele Anwendungen ist es wichtig, dass die Apertur in Bezug zum Messstrahl, d.h. zur optischen Achse, exakt justiert wird. Bei einer kreisförmigen Apertur kann es beispielsweise erwünscht sein, dass das Zentrum des Messstrahls durch das Zentrum der Apertur verläuft. Ein Problem bei bekannten optischen Messsystemen ist es, dass die Justierung der Blende und der darin angeordneten Apertur relativ zum Messstrahl aufwändig ist und viel Zeit kostet.

Vor diesem Hintergrund ist es die Aufgabe der vorliegenden Erfindung, eine einfachere und benutzerfreundlichere Justierung der Blende zu ermöglichen. Gelöst wird diese Aufgabe mit den Merkmalen der unabhängigen Ansprüche. Vorteilhafte Ausführungsformen sind in den Unteransprüchen beschrieben.

Das erfindungsgemäße System umfasst eine Abbildungsoptik, eine Blende mit einer Apertur und einen Detektor für von der Blende reflektiertes Licht. Die Blende weist außerdem eine Markierung auf, die in Bezug zur Apertur eine definierte Position hat.

Die Abbildungsoptik ist dazu ausgelegt, die Blende auf den Detektor abzubilden. Der Detektor dient dazu, die Position der Markierung relativ zu der optischen Achse zu ermitteln. Zunächst werden einige im Rahmen der Erfindung verwendete Begriffe erläutert. Der Begriff Abbildungsoptik bezeichnet im Rahmen der Erfindung ein optisches Element oder eine Anordnung mehrerer optischer Elemente, beispielsweise Linsen und/oder Spiegel, welche von der Blendenebene ausgehendes Licht in die Detektorebene abbilden. Die optische Achse wird durch die Abbildungsoptik definiert und erstreckt sich in Richtung der Blende.

Eine Apertur bezeichnet im Rahmen der Erfindung eine Öffnung in einer Blende. Die Blende ist vorzugsweise undurchlässig für die verwendeten Messstrahlen. Beispielsweise kann die Blende aus Aluminium bestehen. Eine auf der Blende angeordnete Markierung stellt einen Bereich auf der Blende dar, welcher optisch von dem die Markierung umgebenden Blendenmaterial unterscheidbar ist.

Mit Hilfe des erfindungsgemäßen Systems wird die Justierung der Blende relativ zur optischen Achse deutlich vereinfacht. Die Blende kann zunächst so angeordnet werden, dass die optische Achse näherungsweise durch die Apertur verläuft. Durch die Abbildungsoptik wird die Ebene, in der sich die Blende befindet (Blendenebene), in die Ebene, in der sich der Detektor befindet (Detektorebene), abgebildet. Das Bild der auf der Blende angeordneten Markierung kann dann vom Detektor erfasst werden. Da einerseits die Markierung in Bezug zur Apertur eine definierte Position hat und andererseits mit dem Detektor die Position der Markierung relativ zu der optischen Achse ermittelt wird, kann das in die Detektorebene abgebildete Bild der Markierung zur Justierung der Blende verwendet werden.

Das Bild der Markierung nimmt in der Detektorebene eine definierte Soll-Position ein, wenn sich die Blende in der gewünschten exakt justierten Position befindet. Diese Soll-Position kann bei Kenntnis der optischen Eigenschaften der Abbildungsoptik bestimmt werden. Sofern die Ist-Position des Bildes der Markierung auf dem Detektor nicht mit der Soll-Position übereinstimmt, kann die Blende bei gleichzeitiger Beobachtung des Detektors bewegt werden, bis die Ist-Position mit der Soll-Position übereinstimmt. Die vorliegende Erfindung ermöglicht somit eine unmittelbare Rückmeldung des Positionierungszustandes der Blende relativ zur optischen Achse und ermöglicht damit eine einfachere Justierung.

Die Abbildungsoptik kann ein erstes Linsensystem und ein zweites Linsensystem umfassen, wobei das erste Linsensystem Element einer Messeinheit ist, wobei das zweite Linsensystem Element einer Justiereinheit ist. Die Messeinheit kann dazu ausgelegt sein, einen elektromagnetischen Messstrahl zu erzeugen. Der Messstrahl kann auf ein Objekt gerichtet werden, um bestimmte Eigenschaften des Objekts zu messen. Die Messeinheit kann dazu ausgelegt sein, einen kollimierten Messstrahl in Richtung der Blende zu senden. Zwischen der Messeinheit und der Blende verläuft der Messstrahl vorzugsweise koaxial zur optischen Achse. Der Detektor kann ebenfalls ein Bestandteil der Messeinheit sein.

Die Justiereinheit ist eine von der Messeinheit separate Einheit. Wenn die Messeinheit dazu verwendet wird, den Messstrahl auf das Objekt zu richten, ist die Justiereinheit von der Maßeinheit getrennt. Nur zum Justieren der Blende wird die Justiereinheit mit der Messeeinheit verbunden. Zwischen der Justiereinheit und der Messeinheit ist zu diesem Zweck vorzugsweise eine lösbare Verbindung vorgesehen.

Wenn die Abbildungsoptik ein erstes Linsensystem und ein zweites Linsensystem umfasst, so bedeutet dies, dass das von der Blendenebene ausgehende Licht die optischen Elemente beider Linsensysteme durchläuft und anschließend die Detektorebene erreicht. Ein Linsensystem kann aus einem oder mehreren optischen Elementen bestehen. Bevorzugt haben das erste und das zweite Linsensystem eine gemeinsame optische Achse, wenn die Justiereinheit mit der Messeinheit verbunden ist. Bevorzugt ist vorgesehen, dass die Justiereinheit vor oder bei der ersten Inbetriebnahme einmal so justiert wird, dass die optische Achse der Justiereinheit zur optischen Achse der Messeinheit passt. Bei jedem erneuten Verbinden der Justiereinheit mit der Messeinheit ergibt sich dann automatisch die richtige Ausrichtung der optischen Achsen relativ zueinander.

Der Detektor ist vorzugsweise so angeordnet, dass aus der Position des Bildes auf dem Detektor auf die Position der Blende relativ zur optischen Achse geschlossen werden kann. Beispielsweise kann der Detektor in einer definierten Ausrichtung zur optischen Achse angeordnet sein. Der Detektor kann als flächiger Detektor, beispielsweise als flächiger charge-coupled device (CCD) Sensor ausgebildet sein. Dies erlaubt es, das Bild einer beliebig geformten Markierung sichtbar zu machen. Beispielsweise kann der Detektor dazu mit einem Anzeigegerät verbunden werden, welches das in die Detektorebene abgebildete Bild anzeigt.

Das System kann eine Haltevorrichtung für die Blende umfassen, mit der die Blende in einem geeigneten Abstand zu der Abbildungsoptik angeordnet werden kann. Die Haltevorrichtung kann eine einstellbare Positioniervorrichtung für die Blende aufweisen. Die Positioniervorrichtung kann zum Verschieben der Blende in alle Raumrichtungen ausgestaltet sein und/oder zur Neigung der Blende um eine beliebige Achse. Bevorzugt weist die Blende eine Vorjustierung auf, beispielsweise kann die Blende exakt senkrecht zur optischen Achse ausgerichtet sein. Bevorzugt ist die Positioniervorrichtung lediglich zum Verschieben der Blende in einer zu der optischen Achse senkrechten Ebene ausgeführt. Auf diese Weise kann die Blende einfach relativ zur optischen Achse bewegt und in die exakt justierte Position gebracht werden.

Vorzugsweise ist das zweite Linsensystem als verstellbares Linsensystem ausgestaltet. Das zweite Linsensystem kann dann auf unterschiedliche Blendenentfernungen eingestellt werden und ist flexibler einsetzbar. Das zweite Linsensystem kann beispielsweise durch verschiebbare Linsen gebildet werden. In einer bevorzugten Ausführungsform umfasst das zweite Linsensystem eine verschiebbare Negativlinse und eine feststehende Positivlinse.

Bevorzugt wird das zweite Linsensystem so eingestellt, dass der von der Blende ausgehende Strahlengang zwischen dem ersten Linsensystem und dem zweiten Linsensystem kollimiert ist. Damit passt die Justiereinheit zu Messeinheiten, bei denen ein kollimierter Strahl in das Linsensystem der Messeinheit eintritt, um auf den Detektor abgebildet zu werden. Die Messeinheit kann also insbesondere ein Autokollimator sein.

Bevorzugt weist die Markierung einen großen optischen Kontrast relativ zum Blendenmaterial auf, welches die Markierung umgibt. Das Bild der Markierung kann dann leicht vom Detektor erfasst werden. Beispielsweise kann das Blendenmaterial schwarz und die Markierung weiß ausgestaltet sein. Damit die Markierung beim Betrieb der Messeinheit nicht stört, ist die Markierung vorzugsweise beabstandet vom Rand der Apertur. Der Abstand beträgt vorzugsweise mindestens 1 mm, weiter vorzugsweise mindestens 2 mm, weiter vorzugsweise mindestens 5 mm. Die Apertur kann beispielsweise einen Durchmesser zwischen 1 mm und 10 mm, vorzugsweise zwischen 2 mm und 6 mm haben.

Es kann ausreichend sein, wenn die Blende und die darauf angeordnete Markierung durch Umgebungslicht beleuchtet werden. In einer vorteilhaften Ausführungsform weist die Justiereinheit eine Beleuchtungsvorrichtung zur Beleuchtung der Markierung auf. Wenn die Markierung beleuchtet wird, erfolgt eine bessere Abbildung der Markierung in die Detektorebene, so dass die Markierung besser vom Detektor erfasst werden kann. Die Lichtquellen können in einer Stirnfläche der Justiereinheit angeordnet sein, die in Richtung der Blende weist. Die Beleuchtungsvorrichtung kann durch eine Mehrzahl von Lichtquellen gebildet sein. Bevorzugt sind die Lichtquellen gleichmäßig um die optische Achse der herum angeordnet. Dies sorgt für eine gleichmäßige Ausleuchtung der Blende und der darauf angeordneten Markierung. Die Lichtquellen können beispielsweise LEDs umfassen.

Die Markierung kann grundsätzlich eine beliebige Form aufweisen. Sind die Eigenschaften der Abbildungsoptik sowie der Abstand zwischen der Abbildungsoptik und der Blende bekannt, so ist es bei beliebig geformten Markierungen möglich, die Blende zu justieren. Erleichtert werden kann die Justierung, wenn die Blende eine Symmetrie bezogen auf die Apertur aufweist. Die Blende kann dann justiert werden, ohne dass der Abstand zwischen der Blende bekannt ist, indem die Blende so verschoben wird, dass das Bild auf dem Detektor entsprechend symmetrisch zu einem Bezugspunkt positioniert wird, der der optischen Achse entspricht.

Beispielsweise kann die Markierung zwei Linien umfassen, die die Apertur zwischen sich einschließen. Die Linien können parallel zueinander sein, wobei die Apertur vorzugsweise mittig zwischen den beiden Linien angeordnet ist. Die beiden Linien können dazu genutzt werden, die Blende in einer zu den Linien senkrechten Richtung auszurichten. Weiter vorzugsweise kann die Markierung zwei Paare von Linien umfassen, die paarweise senkrecht zueinander angeordnet sind und wobei jedes Paar von Linien die Apertur mittig zwischen sich einschließt. Damit kann die Blende in beiden Richtung justiert werden. Insbesondere können die beiden Paare von Linien ein Quadrat bilden, in dessen Mitte die Apertur angeordnet ist. Die Kantenlänge des Quadrats kann beispielsweise
zwischen 1 mm und 20 mm liegen, bevorzugt zwischen 3 mm und 10 mm liegen. Anhand der Größe des symmetrischen Bildes auf dem Detektor wäre es außerdem möglich, auf die Entfernung zwischen der Blende und der Abbildungsoptik zu schließen.

Die Markierung weist bevorzugt eine Liniendicke zwischen 0,1 mm und 5 mm auf, bevorzugt zwischen 0,3 mm und 3 mm. Je größer die Liniendicke, desto größer ist das von der Linie erzeugte Detektorsignal. Gleichzeitig nimmt allerdings die mögliche Positioniergenauigkeit mit der Liniendicke ab. Der oben genannte Bereich stellt vor diesem Hintergrund einen guten Kompromiss zwischen Justierungsgenauigkeit und Detektorsignalstärke dar.

Insbesondere wenn die Markierung aufeinander senkrecht stehende Linien umfasst, kann es sinnvoll sein, als Detektor einen Liniendetektor zu verwenden, welcher bevorzugt zwei gekreuzte Linienelemente zur Erfassung eines Bildsignals aufweist. Beispielsweise können die Linienelemente als gekreuzte CCD-Zeilen ausgestaltet sein. Bei entsprechender relativer Ausrichtung zwischen den Linien der Markierung und den Linienelementen des Detektors wird jedes Linienelement von jeder Linien genau einmal geschnitten. Durch Verschieben der Blende können die Detektorsignale der Markierungslinien dann leicht in ihre Soll-Positionen und die Blende auf diese Weise in die exakte Justierungsposition gebracht werden.

Bevorzugt sind die Linienelemente des Detektors senkrecht zueinander und senkrecht zu entsprechenden auf der Blende angeordneten Markierungslinien ausgerichtet. Beispielsweise kann ein Linienelement entlang der Querrichtung und das andere Linienelement entlang der vertikalen Richtung ausgerichtet sein. Ein Liniendetektor ist im Vergleich zu einem flächigen Detektor einfacher und kostengünstiger, wobei die Justierungsgenauigkeit, wie oben erläutert, nicht eingeschränkt wird.

In einer bevorzugten Ausführungsform weisen die Justiereinheit und die Messeinheit zur Herstellung der Verbindung korrespondierende Magnetverbindungselemente auf. Solche Magnetverbindungselemente erlauben eine positionsgenaue Verbindung, welche auf einfache Art hergestellt und wieder gelöst werden kann. Möglich sind auch andere Arten der Verbindungsherstellung wie beispielsweise eine Schraubverbindung oder eine Steckverbindung.

Gegenstand der Erfindung ist weiterhin ein Verfahren zum Ausrichten einer Blende relativ zu einer optischen Achse, wobei die Blende eine Markierung aufweist, die in Bezug zur Apertur eine definierte Position hat. Bei dem Verfahren wird die Blende relativ zur optischen Achse positioniert, so dass die optische Achse näherungsweise durch die Apertur verläuft. Die Blende wird auf einen Detektor abgebildet. Die Position der Markierung relativ zu der optischen Achse wird ermittelt. In einer bevorzugten Ausführungsform kann die Blende verschoben werden, bis die Ist-Position des Bildes der Markierung in der Detektorebene mit einer Soll-Position des Bildes der Markierung in der Detektorebene übereinstimmt. Eine Beleuchtungsvorrichtung kann zum Beleuchten der Markierung verwendet werden.

Das Verfahren kann mit weiteren Merkmalen fortgebildet werden, die im Zusammenhang des erfindungsgemäßen Systems beschrieben sind. Das System kann mit weiteren Merkmalen fortgebildet werden, die im Zusammenhang des erfindungsgemäßen Verfahrens beschrieben sind.

Die Erfindung wird nachfolgend unter Bezugnahme auf die beigefügten Zeichnungen anhand einer vorteilhaften Ausführungsform beispielhaft beschrieben. Es zeigen:
- Figur 1:: eine dreidimensionale seitliche Ansicht eines erfindungsgemäßen optischen Systems aus einer ersten Perspektive;
- Figur 2:: eine dreidimensionale seitliche Ansicht eines erfindungsgemäßen optischen Systems aus einer zweiten Perspektive;
- Figur 3:: eine vergrößerte Ansicht einer erfindungsgemäßen Blende;
- Figur 4:: eine schematische Ansicht eines erfindungsgemäßen optischen Systems;
- Figur 5:: eine schematische Ansicht eines erfindungsgemäßen Detektors sowie des Bildes einer erfindungsgemäßen Markierung in der Detektorebene, wobei die Markierung nicht exakt justiert ist;
- Figur 6:: eine schematische Ansicht eines erfindungsgemäßen Detektors sowie des Bildes einer erfindungsgemäßen Markierung in der Detektorebene, wobei die Markierung exakt justiert ist.

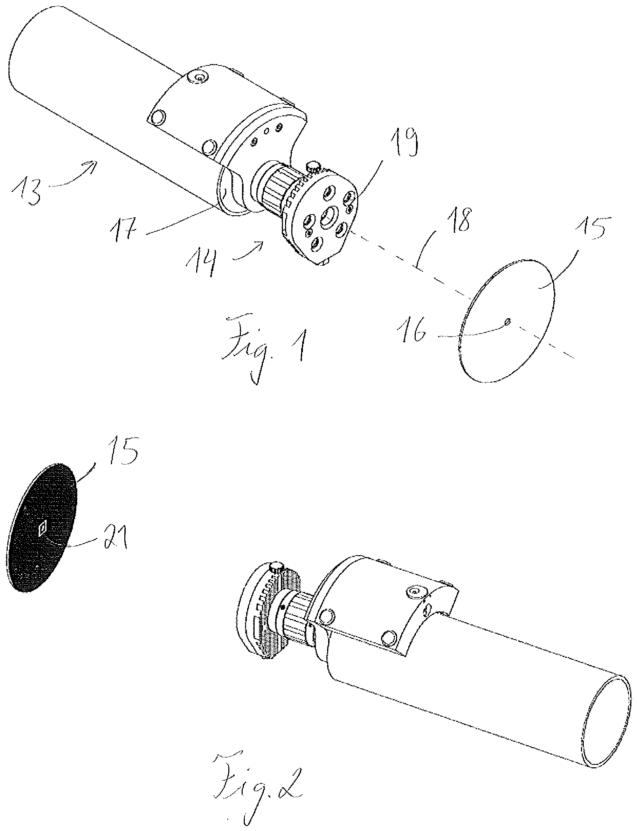

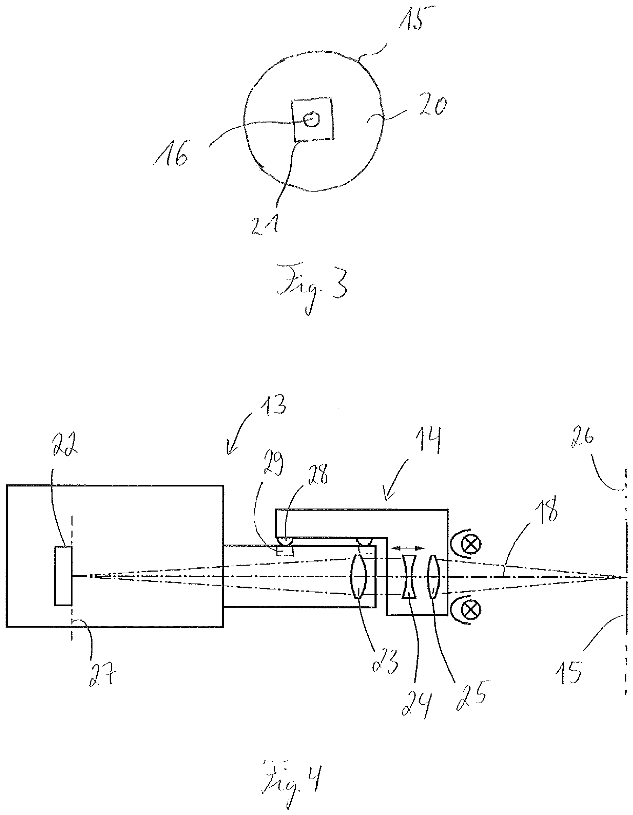

Die Figuren 1, 2 und 4 zeigen ein erfindungsgemäßes optisches System in zwei perspektivischen dreidimensionalen Ansichten. Das optische System umfasst eine Messeinheit 13, eine Justiereinheit 14 und eine Blende 15. Die Blende 15 weist eine Apertur 16 auf. In Figur 2 ist zudem eine Markierung 21 erkennbar, welche sich um die Apertur 16 herum erstreckt. Die Ausgestaltung der Blende wird später in Verbindung mit Figur 3 noch näher erläutert.

Innerhalb der Messeinheit 13 sind ein Detektor 22 sowie ein erstes Linsensystem 23 angeordnet. Die Justiereinheit 14 ist am vorderen Ende 17 der Messeinheit 13 mit Hilfe einer Magnetverbindung 28, 29 befestigt. Die Justiereinheit umfasst eine einstellbare zweite Abbildungsoptik 24, 25. Die Magnetverbindung ist so ausgestaltet, dass das erste Linsensystem 23 und das zweite Linsensystem 24, 25 eine gemeinsame optische Achse 18 aufweisen. Am vorderen Ende der Justiereinheit 14 befinden sich fünf LEDs 19 zur Beleuchtung der Blende 15 und insbesondere der darauf angeordneten Markierung 21. Die LEDs 19 sind gleichmäßig um die optische Achse 18 herum angeordnet und sorgen so für eine gleichmäßige Ausleuchtung der Markierung.

Figur 3 zeigt die Blende 15 in einer vergrößerten Ansicht. Die Blende besteht aus einer Aluminiumplatte, welche auf ihrer Vorderseite 20 mit einer schwarzen Beschichtung versehen ist. Die Apertur 16 ist kreisförmig und hat einen Durchmesser von 2,5 mm. Um die Apertur 16 herum ist eine Markierung 21 angeordnet. Die Markierung 21 besteht aus einem weißen Quadrat mit einer Kantenlänge von 6 mm und einer Liniendicke von 0,5 mm. Die Apertur 16 ist innerhalb des Quadrates zentral angeordnet.

Figur 4 zeigt eine schematische seitliche Ansicht des erfindungsgemäßen optischen Messsystems. In dieser Darstellung sind weitere Elemente des Messsystems zu sehen. Zunächst ist ein Detektor 22 innerhalb der Messeinheit 13 erkennbar. Außerdem ist zu sehen, dass die erste Abbildungsoptik der Messeinheit 13 eine Objektivlinse 23 aufweist. Weiterhin ist ersichtlich, dass die in der Justiereinheit 14 angeordnete zweite Abbildungsoptik eine verschiebbare Negativlinse 24 und eine feststehende Positivlinse 25 umfasst. In dem in Figur 4 gezeigten verbundenen Zustand zwischen der Messeinheit 13 und der Justiereinheit 14 weisen die Objektivlinse 23 sowie die Negativ- und die Positivlinse 24, 25 eine gemeinsame optische Achse 18 auf. Eine genaue Positionierung der Justiereinheit 14 relativ zur Messeinheit 13 wird durch Magnetverbindungselemente 28, 29 gewährleistet.

Die Figur 4 zeigt außerdem einen beispielhaften Strahlengang, über den die Blendenebene 26 in die Detektorebene 27 abgebildet wird. Die Ebenen 26 und 27 sind in Figur 4 gestrichelt angedeutet. Dabei wird ein in der Blendenebene 26 befindlicher Gegenstandspunkt zunächst über die Linsen 24, 25 ins unendliche abgebildet, d.h. es wird ein parallel verlaufender Strahlengang erzeugt. Die Objektivlinse 23 bildet das parallel einfallende Licht anschließend auf einen Bildpunkt in der Detektorebene 27 ab. Auf diese Weise wird auch das um die Apertur 16 herum angeordnete weiße Quadrat 21 in die Detektorebene 27 abgebildet.

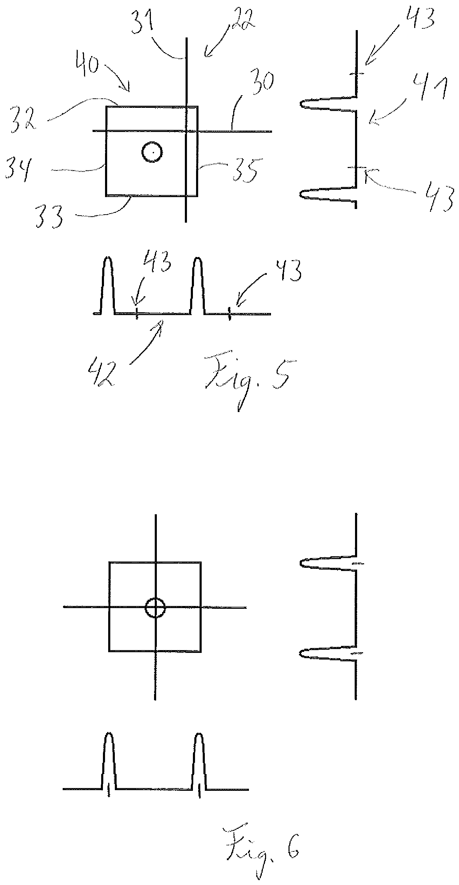

Figur 5 zeigt eine schematische Ansicht eines erfindungsgemäßen Detektors 22 sowie des Bildes 40 einer erfindungsgemäßen Markierung in der Detektorebene. Wie in Figur 5 gezeigt ist, umfasst der Detektor 22 zwei gekreuzte Linienelemente 30, 31. Das Linienelement 30 verläuft entlang der Querrichtung, das Linienelement 31 ist entlang der vertikalen Richtung ausgerichtet. Das Linienelement 30 verläuft somit parallel zu den Markierungslinien 32, 33 und das Linienelement 31 verläuft parallel zu den Markierungslinien 34, 35. Jedes Linienelement wird daher von dem Bild zweier Markierungslinien geschnitten. An den Schnittpunkten entsteht ein Detektorsignal, welches in Figur 5 rechts (Signal 41) und unterhalb (Signal 42) des Detektors 22 illustriert ist. Signal 41 stellt das Signal des Linienelements 31 dar, Signal 42 das des Linienelements 30. Außerdem sind die Soll-Positionen 43 der Detektorsignale illustriert, welche bei exakt justierter Blende erwartet werden. Wie in Figur 5 zu sehen ist, ist die Blende nicht exakt justiert, so dass die Signale der Ist-Positionen nicht mit den Soll-Positionen übereinstimmen.

Die Blende kann aber entlang der Querrichtung und entlang der vertikalen Richtung verschoben werden, bis die Ist-Positionen mit den Soll-Positionen übereinstimmen. Der Zustand nach exakter Justierung ist in der Figur 6 in entsprechender Weise illustriert.

## Patentansprüche

1. System zum Ausrichten einer Blende (15) relativ zu einer optischen Achse (18) einer Abbildungsoptik (23, 24, 25), umfassend die Abbildungsoptik (23, 24, 25) und eine Blende (15) mit einer Apertur (16), **dadurch gekennzeichnet, dass** das System weiterhin einen Detektor (22) für von der Blende (15) reflektiertes Licht aufweist, wobei die Blende (15) eine Markierung (21) aufweist, die in Bezug zur Apertur (16) eine definierte Position hat, wobei die Abbildungsoptik (23, 24, 25) dazu ausgelegt ist, die Blende (15) auf den Detektor (22) abzubilden, und wobei der Detektor (22) dazu dient, die Position der Markierung (21) relativ zu der optischen Achse (18) zu ermitteln.

2. System nach Anspruch 1, **dadurch gekennzeichnet, dass** die Abbildungsoptik ein erstes Linsensystem (23) und ein zweites Linsensystem (24, 25) umfasst, wobei das erste Linsensystem (23) Element einer Messeinheit (13) ist, wobei das zweite Linsensystem (24, 25) Element einer Justiereinheit (14) ist und wobei eine lösbare Verbindung (28, 29) zwischen der Justiereinheit (14) und der Messeinheit (13) vorgesehen ist.

3. System nach Anspruch 2, **dadurch gekennzeichnet, dass** das zweite Linsensystem (24, 25) als verstellbares Linsensystem zur Einstellung auf unterschiedliche Blendenentfernungen ausgestaltet ist.

4. System nach einem der Ansprüche 1 bis 3, **dadurch gekennzeichnet, dass** die Markierung (21) einen hohen optischen Kontrast relativ zum Blendenmaterial aufweist, welches die Markierung (21) umgibt.

5. System nach einem der Ansprüche 2 bis 4, **dadurch gekennzeichnet, dass** die Justiereinheit (14) eine Beleuchtungsvorrichtung (19) zum Beleuchten der Blende (15) aufweist.

6. System nach Anspruch 5, **dadurch gekennzeichnet, dass** die Beleuchtungsvorrichtung (19) durch eine Mehrzahl von Lichtquellen gebildet wird, die um die optische Achse des zweiten Linsensystems herum angeordnet sind.

7. System nach einem der Ansprüche 1 bis 6, **dadurch gekennzeichnet, dass** die Markierung (21) eine Symmetrie bezogen auf die Apertur (16) aufweist.

8. System nach Anspruch 7, **dadurch gekennzeichnet, dass** die Markierung (21) zwei zueinander parallele Linien aufweist, die die Apertur (16) mittig zwischen sich einschließen.

9. System nach Anspruch 7 oder 8, **dadurch gekennzeichnet, dass** die Markierung (21) vier gerade Linien umfasst, welche die Apertur einschließen, wobei die Linien bevorzugt senkrecht aufeinander stehen und weiter bevorzugt ein Quadrat bilden.

10. System nach einem der Ansprüche 1 bis 9, **dadurch gekennzeichnet, dass** der Detektor (22) als flächiger Detektor ausgestaltet ist.

11. System nach einem der Ansprüche 1 bis 9, **dadurch gekennzeichnet, dass** der Detektor (22) als Liniendetektor ausgestaltet ist.

12. System nach Anspruch 11, **dadurch gekennzeichnet, dass** der Detektor (22) zwei gekreuzte Linienelemente zur Erfassung von Bildsignalen aufweist.

13. System nach einem der Ansprüche 1 bis 12, **dadurch gekennzeichnet, dass** die lösbare Verbindung zwischen der Justiereinheit (14) und der Messeinheit (13) eine Magnetverbindung (28, 29) ist.

14. Verfahren zum Ausrichten einer Blende (15) relativ zu einer optischen Achse (18) einer Abbildungsoptik (23, 24, 25), wobei die Blende (15) eine Markierung (21) aufweist, die in Bezug zur Apertur (16) eine definierte Position hat, umfassend die nachfolgenden Schritte:
a. Positionieren der Blende (15) relativ zur optischen Achse (18), so dass die optische Achse (18) näherungsweise durch die Apertur (16) verläuft;
b. Abbilden der Blende (15) auf einen Detektor (22);
c. Ermitteln der Position der Markierung (21) relativ zu der optischen Achse (18).

15. Verfahren nach Anspruch 14, **dadurch gekennzeichnet, dass** die Blende (15) verschoben wird, bis die Ist-Position des Bildes der Markierung (21) in der Detektorebene (27) mit einer Soll-Position des Bildes der Markierung (21) in der Detektorebene (27) übereinstimmt.

## Claims

1. System for aligning a stop (15) relative to an optical axis (18) of an imaging optical unit (23, 24, 25), comprising the imaging optical unit (23, 24, 25) and a stop (15) with an aperture (16), **characterized in that** the system furthermore has a detector (22) for light reflected by the stop (15), wherein the stop (15) has a mark (21) which has a defined position in relation to the aperture (16), wherein the imaging optical unit (23, 24, 25) is designed to image the stop (15) onto the detector (22) and wherein the detector (22) serves to establish the position of the mark (21) relative to the optical axis (18).

2. System according to Claim 1, **characterized in that** the imaging optical unit comprises a first lens system (23) and a second lens system (24, 25), wherein the first lens system (23) is an element of a measuring unit (13), wherein the second lens system (24, 25) is an element of an adjustment unit (14) and wherein a detachable connection (28, 29) is provided between the adjustment unit (14) and the measuring unit (13).

3. System according to Claim 2, **characterized in that** the second lens system (24, 25) is configured as an adjustable lens system for providing settings for different stop distances.

4. System according to any one of Claims 1 to 3, **characterized in that** the mark (21) has a high optical contrast relative to the stop material which surrounds the mark (21).

5. System according to any one of Claims 2 to 4, **characterized in that** the adjustment unit (14) has an illumination apparatus (19) for illuminating the stop (15).

6. System according to Claim 5, **characterized in that** the illumination apparatus (19) is formed by a plurality of light sources which are arranged around the optical axis of the second lens system.

7. System according to any one of Claims 1 to 6, **characterized in that** the mark (21) has a symmetry in relation to the aperture (16).

8. System according to Claim 7, **characterized in that** the mark (21) has two lines that are parallel to one another, said lines including the aperture (16) centrally between them.

9. System according to Claim 7 or 8, **characterized in that** the mark (21) comprises four straight lines which include the aperture, wherein the lines preferably are perpendicular to one another and further preferably form a square.

10. System according to any one of Claims 1 to 9, **characterized in that** the detector (22) is configured as an areal detector.

11. System according to any one of Claims 1 to 9, **characterized in that** the detector (22) is configured as a line detector.

12. System according to Claim 11, **characterized in that** the detector (22) has two crossed line elements for capturing image signals.

13. System according to any one of Claims 1 to 12, **characterized in that** the detachable connection between the adjustment unit (14) and the measuring unit (13) is a magnetic connection (28, 29).

14. Method for aligning a stop (15) relative to an optical axis (18) of an imaging optical unit (23, 24, 25), wherein the stop (15) has a mark (21) which has a defined position in relation to the aperture (16), said method comprising the following steps:
a. positioning the stop (15) relative to the optical axis (18) such that the optical axis (18) extends approximately through the aperture (16);
b. imaging the stop (15) onto a detector (22);
c. establishing the position of the mark (21) relative to the optical axis (18).

15. Method according to Claim 14, **characterized in that** the stop (15) is displaced until the actual position of the image of the mark (21) in the detector plane (27) corresponds to an intended position of the image of the mark (21) in the detector plane (27).

## Revendications

1. Système d'alignement d'un diaphragme (15) par rapport à un axe optique (18) d'une optique de formation d'image (23, 24, 25), comprenant l'optique de formation d'image (23, 24, 25) et un diaphragme (15) doté d'une ouverture (16), **caractérisé en ce que** le système comprend en outre un détecteur (22) destiné à la lumière réfléchie par le diaphragme (15), dans lequel le diaphragme (15) présente un marquage (21) ayant une position définie par rapport à l'ouverture (16), dans lequel l'optique de formation d'image (23, 24, 25) est conçue pour former une image du diaphragme (15) sur le détecteur (22), et dans lequel le détecteur (22) sert à déterminer la position dudit marquage (21) par rapport à l'axe optique (18).

2. Système selon la revendication 1, **caractérisé en ce que** l'optique de formation d'image comprend un premier système de lentilles (23) et un second système de lentilles (24, 25), dans lequel le premier système de lentilles (23) est un élément d'une unité de mesure (13), dans lequel le second système de lentilles (24, 25) est un élément d'une unité de réglage (14) et dans lequel il est prévu une liaison amovible (28, 29) entre l'unité de réglage (14) et l'unité de mesure (13).

3. Système selon la revendication 2, **caractérisé en ce que** le second système de lentilles (24, 25) est réalisé sous la forme d'un système de lentilles réglable permettant un réglage sur différentes distances du diaphragme.

4. Système selon l'une quelconque des revendications 1 à 3, **caractérisé en ce que** le marquage (21) présente un contraste optique élevé par rapport au matériau du diaphragme entourant le marquage (21).

5. Système selon l'une quelconque des revendications 2 à 4, **caractérisé en ce que** l'unité de réglage (14) comporte un dispositif d'éclairage (19) destiné à éclairer le diaphragme (15).

6. Système selon la revendication 5, **caractérisé en ce que** le dispositif d'éclairage (19) est formé par une pluralité de sources de lumière disposées autour de l'axe optique du second système de lentilles.

7. Système selon l'une quelconque des revendications 1 à 6, **caractérisé en ce que** le marquage (21) présente une symétrie par rapport à l'ouverture (16) .

8. Système selon la revendication 7, **caractérisé en ce que** le marquage (21) présente deux lignes parallèles l'une à l'autre qui enserrent centralement entre elles le diaphragme (16).

9. Système selon la revendication 7 ou 8, **caractérisé en ce que** le marquage (21) comprend quatre lignes droites qui enserrent l'ouverture, dans lequel les lignes sont de préférence perpendiculaires les unes aux autres et forment de manière plus préférable un carré.

10. Système selon l'une quelconque des revendications 1 à 9, **caractérisé en ce que** le détecteur (22) est réalisé sous la forme d'un détecteur plan.

11. Système selon l'une quelconque des revendications 1 à 9, **caractérisé en ce que** le détecteur (22) est réalisé sous la forme d'un détecteur linéaire.

12. Système selon la revendication 11, **caractérisé en ce que** le détecteur (22) présente deux éléments linéaires croisés destinés à détecter des signaux d'image.

13. Système selon l'une quelconque des revendications 1 à 12, **caractérisé en ce que** la liaison amovible entre l'unité de réglage (14) et l'unité de mesure (13) est une liaison magnétique (28, 29).

14. Procédé d'alignement d'un diaphragme (15) par rapport à un axe optique (18) d'un système optique de formation d'image (23, 24, 25), dans lequel le diaphragme (15) présente un marquage (21) ayant une position définie par rapport à l'ouverture (16), comprenant les étapes suivantes :
a. positionner le diaphragme (15) par rapport à l'axe optique (18) de manière à ce que l'axe optique (18) passe approximativement à travers l'ouverture (16) ;
b. former une image du diaphragme (15) sur un détecteur (22) ;
c. déterminer la position du marquage (21) par rapport à l'axe optique (18).

15. Procédé selon la revendication 14, **caractérisé en ce que** le diaphragme (15) est décalé jusqu'à ce que la position réelle de l'image du marquage (21) dans le plan du détecteur (27) coïncide avec une position nominale de l'image du marquage (21) dans le plan du détecteur (27) .
